# EUROPÄISCHE PATENTSCHRIFT

(11) **EP 3 583 335 B1**
(45) Veröffentlichungstag und Bekanntmachung des Hinweises auf die Patenterteilung: **27.01.2021**
(21) Anmeldenummer: 18705572.8
(22) Anmeldetag: 07.02.2018
(51) Int. Cl.: F16J 15/16, F16J 15/3224, F16J 15/3264

(54) **DICHTUNGSANORDNUNG**
SEAL ARRANGEMENT
ENSEMBLE D'ÉTANCHÉITÉ

(30) Priorität: 17.02.2017 DE 102017202613
(43) Veröffentlichungstag der Anmeldung: 25.12.2019
(73) Patentinhaber: Trelleborg Sealing Solutions Germany GmbH, 70565 Stuttgart (DE)
(72) Erfinder: JORDAN, Holger, 73765 Neuhausen (DE); WILKE, Mandy, 71034 Böblingen (DE)
(74) Vertreter: Kohler Schmid Möbus Patentanwälte
(86) Internationale Anmeldenummer: PCT/EP2018/053032
(87) Internationale Veröffentlichungsnummer: WO 2018/149711

(56) Entgegenhaltungen:
- CN-A- 105 221 580
- US-A1- 2015 001 810

## Beschreibung

Die Erfindung betrifft eine Dichtungsanordnung umfassend ein erstes Maschinenteil und ein zweites Maschinenteil, die unter Ausbildung eines Dichtspalts voneinander beabstandet angeordnet und um eine Bewegungsachse relativ zueinander rotatorisch bewegbar sind. Die Dichtungsanordnung weist einen Radialwellendichtring zum Abdichten einer mit einem Fluid druckbeaufschlagbaren Hochdruckseite des Dichtspalts gegenüber einer Niederdruckseite des Dichtspalts auf. Der Radialwellendichtring umfasst einen Fußabschnitt, der an einer Dichtungshaltestruktur des ersten Maschinenteils gehalten angeordnet ist und einen am Fußabschnitt flexibel angelenkten Dichtkopf, der an der Dichtfläche des zweiten Maschinenteils in einer radialen Richtung dynamisch dichtend anliegt.

Derlei dynamische Dichtungsanordnungen stellen wesentliche Konstruktionselemente im Maschinenbau sowie im Fahrzeugbau dar. Zugleich sind derlei Radialwellendichtringe in der Praxis nicht zuletzt aufgrund der technischen Weiterentwicklung der Aggregate immer weiter steigenden Betriebsdrücken, Temperaturen und Gleitgeschwindigkeiten ausgesetzt. Das Versagen von Radialwellendichtringen führt dabei zu einer unerwünschten Leckage des abzudichtenden Fluids, was insbesondere bei kritischen Anwendungen verheerende Folgen haben kann. Die Radialwellendichtringe müssen mithin immer höheren Anforderungen an deren Dichtvermögen gerecht werden und sollen dabei zugleich eine verbesserte Lebensdauer aufweisen.

Einer reibungsbedingten Lebensdauerverkürzung der Radialwellendichtringe wird in der Praxis vorrangig durch ein optimiertes Schmieren im Bereich des an der Dichtfläche anliegenden Dichtabschnitts des Radialwellendichtrings, den Einsatz von Materialpaarungen mit möglichst geringer Gleitreibung sowie einer optimierten Wärmeabfuhr im Bereich der Dichtzone entgegengewirkt. Diesbezüglich wird auch versucht, das sogenannte Rückschleppvermögen der Radialwellendichtringe weiter zu verbessern.

CN 105221580 A offenbart eine Dichtungsanordnung gemäß dem Oberbegriff des Anspruchs 1.

Es ist die Aufgabe der Erfindung, eine Dichtungsanordnung anzugeben, bei denen der Radialwellendichtring, insbesondere auch bei großen oder sehr großen Gleitgeschwindigkeiten und selbst bei einer Druckbeaufschlagung der Hochdruckseite des Dichtspalts, vor übermäßigen mechanischen und thermischen Belastungen besser geschützt ist.

Die erfindungsgemäße Dichtungsanordnung ist in Anspruch 1 angegeben. Weiterbildungen der Erfindung sind Gegenstand der Unteransprüche.

Die erfindungsgemäße Dichtungsanordnung zeichnet sich im Wesentlichen dadurch aus, dass die Dichtfläche einen an die Hochdruckseite angrenzenden ersten Dichtflächenabschnitt und einen sich in axialer Richtung daran anschließenden und an die Niederdruckseite angrenzenden zweiten Dichtflächenabschnitt aufweist. Der erste Dichtflächenabschnitt ist axial in Richtung auf die Niederdruckseite relativ zur Bewegungsachse unter einem spitzen Winkel schräg verlaufend angeordnet. Der erste Dichtflächenabschnitt erstreckt sich dabei mit einer geringen Neigung in einer radialen Richtung von der Bewegungsachse zur Niederdruckseite hin weg. Der Dichtkopf liegt bei Druckbeaufschlagung der Hochdruckseite H des Dichtspalts mit einem Betriebsdruck p_{w}, der kleiner ist, als ein vorgegebener Grenzbetriebsdruck pₗᵢₘᵢₜ, an dem ersten Dichtflächenabschnitt der Dichtfläche an. Der zweite Dichtflächenabschnitt ist nach der Erfindung in Richtung auf die Niederdruckseite radial in Richtung auf die Bewegungsachse schräg verlaufend angeordnet und bildet einen Axialanschlag für den Dichtkopf, an dem der Dichtkopf bei Druckbeaufschlagung der Hochdruckseite mit einem Betriebsdruck p_{w}, der gleich oder größer als der Grenzbetriebsdruckwert pₗᵢₘᵢₜ ist, in axialer Richtung dichtend anliegt.

Bei einer rotatorischen Relativbewegung der beiden Maschinenteile dreht sich entweder der Radialwellendichtring gemeinsam mit dem die Dichtungshaltestruktur aufweisenden Maschinenteil relativ zur Dichtfläche oder das die Dichtfläche aufweisende Maschinenteil dreht sich relativ zum Radialwellendichtring. Das hochdruckseitig angeordnete Fluid wird dabei durch dessen Reibung an der Dichtfläche bzw. an dem ersten Maschinenteil mit dem daran gehaltenen Radialwellendichtring sowie durch seine ihm innewohnende Viskosität in eine um die Bewegungsachse gerichtete Strömung versetzt (sogenannte Taylor-Couette-Strömung).

Ist das die Dichtfläche aufweisende Maschinenteil - bezogen auf die Bewegungsachse der beiden Maschinenteile - das in radialer Richtung innenliegende und in Rotation versetzte Maschinenteil, so drängt das an dem die Dichtfläche aufweisenden Maschinenteil beschleunigte Fluid bei höheren Rotationsgeschwindigkeiten durch die Zentrifugalkraft nach außen. Das die Dichtfläche kontaktierende Fluid kann dabei aufgrund von zwischen dem Fluid und der Dichtfläche gegebenen Adhäsionskräften an dem hochdruckseitigen ersten Dichtflächenabschnitt der Dichtfläche axial in Richtung auf die Hochdruckseite strömen. In einer dazu entsprechenden Weise wird das Fluid bei einem in radialer Richtung außenliegend angeordneten und rotierenden ersten Maschinenteil aufgrund seiner Viskosität und der Wechselwirkung mit an der Dichtfläche auftretenden Adhäsionskräften entlang des ersten (und zur Bewegungsachse nur sanft geneigten) Dichtflächenabschnitts axial in Richtung der Hochdruckseite strömen.

Ist das die Dichtfläche aufweisende Maschinenteil das in radialer Richtung außenliegend angeordnete Maschinenteil, so wird das Fluid aufgrund der Zentrifugalkraft nach radial außen bewegt und den ersten Dichtflächenabschnitt in radialer Richtung anströmen. Das Fluid wird dabei in Richtung der Niederdruckseite im Bereich des an der Dichtfläche anliegenden Dichtkopfs auf der Hochdruckseite anstauen und ggf. verwirbeln. Das Fluid kann nur in Richtung der Hochdruckseite ausweichen und so am ersten Dichtflächenabschnitt der Dichtfläche in axialer Richtung strömen.

Insbesondere bei großen Rotationsgeschwindigkeiten kann so aufgrund der geometrischen Formgebung der Dichtfläche auf der Hochdruckseite des Dichtspalts eine axial gerichtete Fluidströmung erzeugt werden. Durch diese Fluidströmung wird der Dichtkopf hochdruckseitig im Bereich seines an der Dichtfläche anliegenden Dichtabschnitts bzw. Kontaktflächenbereichs, mithin im Bereich der Dichtzone von auf der Hochdruckseite nachströmendem Fluid angeströmt. Dadurch wird die Dichtzone im Betrieb der Dichtungsanordnung mechanisch gespült, ggf. von Verunreinigungen befreit und die Schmierung sowie eine Wärmeabfuhr aus der Dichtzone weiter verbessert. Kommt es aufgrund der auf das Fluid einwirkenden Zentrifugalkraft zu Turbulenzen im Fluid, so wird dadurch eine für die Wärmeabfuhr günstige Durchmischung des Fluids auf der Hochdruckseite erreicht. Auch können dadurch an der Dichtfläche bzw. dem Dichtkopf anhaftende Verunreinigungen aus der Dichtzone herausgelöst und weggespült werden. Insgesamt kann dadurch die Lebensdauer des Radialwellendichtrings durch einfache konstruktive Maßnahmen weiter verbessert werden.

Die vorstehend beschriebene Induktion einer axial gerichteten Fluidströmung kann nach einer Weiterbildung der Erfindung dadurch weiter unterstützt werden, dass der erste Dichtflächenabschnitt der Dichtfläche an seinem hochdruckseitigen, d.h. der Hochdruckseite zuweisenden, Randabschnitt eine oder mehrere Schleuderstrukturen bzw. Tribostrukturen aufweist. Die Tribostruktur(en) ist/sind dabei derart ausgebildet, dass diese bei einer Relativbewegung der beiden Maschinenteile eine in axialer Richtung von der Niederdruckseite wegweisende, d.h. zur Hochdruckseite gerichtete, Fluidströmung bewirken bzw. unterstützen. Die Tribostruktur bzw. -strukturen können dabei eine Vertiefung, insbesondere Nut oder dergleichen, und/oder eine Erhebung bzw. einen Profilfortsatz umfassen, die sich in radialer Richtung von dem Randabschnitt des ersten Dichtflächenabschnitts wegerstreckt. Der Dichtkopf des Radialdichtungselements liegt an diesem Randabschnitt des ersten Dichtflächenabschnitts im nicht-druckbeaufschlagten Zustand der Dichtungsanordnung, d. h. in seiner Ruheposition, vorzugsweise nicht an. Dadurch kann einem unerwünschten Verschleiß bzw. einer Beschädigung des Dichtkopfs entgegengewirkt werden.

Natürlich ist bei dynamischen Dichtsystemen eine - wenn auch nur geringe - Leckage des Fluids von der abzudichtenden Hochdruckseite zu Niederdruckseite nicht vollständig zu verhindern. Durch die Relativbewegung der beiden Maschinenteile wird das auf die Niederdruckseite des Dichtkopfs gelangte Fluid (Leckagefluid) durch die Zentrifugalkraft sowie sein Adhäsionsverhalten an der Dichtfläche entlang der Dichtfläche in axialer Richtung bewegt.

Ist das die Dichtfläche aufweisende zweite Maschinenteil das in radialer Richtung außenliegende Maschinenteil der Dichtungsanordnung, wird das Fluid durch die geometrische Ausformung des zweiten Dichtflächenabschnitts am zweiten Dichtflächenabschnitt zurückgehalten. Dieser zweite Dichtflächenabschnitt ist deshalb relativ zum ersten Dichtflächenabschnitt vorzugsweise zumindest abschnittsweise unter einem größeren Winkel zur Bewegungsachse, d.h. steiler verlaufend, ausgeführt. Das Fluid strömt größtenteils oder vollständig in axialer Richtung zur Dichtzone. Dadurch ist auch eine niederdruckseitige Schmierung der Dichtzone und eine verbessertes Rückschleppverhalten des Fluids auf die Hochdruckseite des Radialwellendichtrings begünstigt.

Zu beachten ist, dass der Dichtkopf unter einer Druckbeaufschlagung der Hochdruckseite mit einem Betriebsdruck p_{w} mit p_{w} kleiner oder gleich dem Grenzbetriebsdruckwert pₗᵢₘᵢₜ relativ zum Fußabschnitt in Richtung der Niederdruckseite deflektieren, d.h. verschwenken bzw. ausweichen, kann. Durch eine Druckbeaufschlagung der Hochdruckseite ist mithin eine - druckproportional zu dem auf der Hochdruckseite jeweilig herrschenden Betriebsdruck p_{w} - translatorische Verschiebung der Dichtzone zwischen Dichtkopf und Dichtfläche, d.h. deren Kontaktflächenbereich, in axialer Richtung relativ zur Dichtfläche bewirkt. Dadurch, dass sich der erste Dichtflächenabschnitt in Richtung der Niederdruckseite mit einer geringen Steigung von der Bewegungsachse schräg verlaufend wegerstreckt, sich also im axialen Verlauf von der Dichtungshaltestruktur des ersten Maschinenteils zunehmend entfernt, kann der Dichtkopf bezüglich seiner Kontaktflächenpressung am ersten Dichtflächenabschnitt der Dichtfläche entlastet werden. Die Kontaktflächenpressung kann dabei in Abhängigkeit von einem auf der Hochdruckseite herrschenden Betriebsdruck eingestellt werden. Dadurch kann einer unerwünschten Zunahme der Reibung zwischen dem Dichtkopf und der Dichtfläche sowie einer damit einhergehenden thermischen Belastung des Dichtkopfs wirksam entgegengewirkt werden. Insgesamt kann also ein mechanothermischer Stress des Radialwellendichtrings bzw. des Dichtkopfs im Betrieb der Dichtungsanordnung verringert werden. Dies gilt zumindest für den Fall, dass der Dichtkopf aufgrund der dem Material des Radialwellendichtrings innewohnenden Elastizität in radialer Richtung an der Dichtfläche vorgespannt dichtend anliegt.

Erreicht oder überschreitet der Betriebsdruck auf der Hochdruckseite den vorgegebenen Grenzdruckwert pₗᵢₘᵢₜ, so wird der Dichtkopf des Radialwellendichtrings in einer zur Bewegungsachse axialen Richtung gegen den durch den zweiten Dichtflächenabschnitt gebildeten Axialanschlag gepresst. Dadurch ist selbst bei großen Betriebsdrücken ein zuverlässiges Dichtvermögen des Radialwellendichtrings gewährleistet. Ein sogenannter Blowbye kann dabei durch eine entsprechende geometrische Formgebung und Bemaßung des zweiten Dichtflächenabschnitts in radialer Richtung zuverlässig vermieden werden. Diesbezüglich erstreckt sich der zweite Dichtflächenabschnitt niederdruckseitig bevorzugt derart weit radial in Richtung auf das erste Maschinenteil, dass der Dichtkopf des Radialwellendichtrings in axialer Richtung vollständig vom zweiten Dichtflächenabschnitt überdeckt ist. Der zweite Dichtflächenabschnitt kann sich nach der Erfindung im Extremfall bis in eine Nut, beispielsweise eine als Dichtungshaltestruktur dienende Haltenut, des ersten Maschinenteils hineinerstrecken, um so eine möglichst große axiale Abstützung bzw. Abstützfläche für den Dichtkopf bereitzustellen. Ein Blow-out des Dichtkopfs kann dadurch vermieden werden. Dadurch, dass der Dichtkopf des Radialwellendichtrings am Fußabschnitt flexibel angelenkt ist, können zum einen Schwingungen der beiden Maschinenteile sowie auch eine in der Praxis kaum vermeidbare Exzentrizität des die Dichtfläche aufweisenden zweiten Maschinenteils vom Radialwellendichtring zuverlässig aufgenommen bzw. kompensiert werden. Einer lokalen mechanischen sowie damit einhergehenden thermischen Überbelastung des Dichtkopf im Bereich seines an der Dichtfläche anliegenden Dichtabschnitts kann so nochmals besser entgegengewirkt werden.

Der Verbindungsabschnitt kann dabei insbesondere membranartig ausgeführt sein, um ein besonders zügiges und feinfühliges Ansprechverhalten des Radialwellendichtrings auf hochdruckseitige Änderungen des Betriebsdrucks p_{w} zu gewährleisten.

Der Radialwellendichtring kann nach der Erfindung ganz oder teilweise aus einem, insbesondere gummielastisch verformbaren, Elastomer bestehen. Auch kann das Material des Radialwellendichtrings dem Bedarf entsprechend Füllstoffe bzw. Armierungseinlagen aufweisen, um den Radialwellendichtring zumindest bereichsweise auszusteifen.

Um eine übermäßige Kontaktpressung des Dichtkopfs an dem durch den zweiten Dichtflächenabschnitt gebildeten niederdruckseitigen Axialanschlag zu verhindern, kann die Dichtungsanordnung fakultativ einen zweiten Axialanschlag für den Radialwellendichtring aufweisen. Der zweite Axialanschlag kann insbesondere durch das erste Maschinenteil gebildet bzw. am ersten Maschinenteil befestigt sein. Vorstellbar ist beispielsweise ein ringförmiges Winkelprofil, das sich radial in Richtung auf das zweite Maschinenteil erstreckt.

Der Radialwellendichtring kann erfindungsgemäß in einer Kartusche angeordnet sein, die am ersten Maschinenteil gehalten angeordnet ist. Die Montage des Radialwellendichtrings kann dadurch im Einzelfall weiter vereinfacht werden. Die Kartusche kann bedarfsweise aus Metall, aus einem Kunststoff oder aus einem Verbundwerkstoff bestehen und etwa einen L- oder U-förmigen Querschnitt aufweisen. Auch kann die Kartusche mehrteilig ausgeführt sein.

Das erste Dichtflächensegment kann nach der Erfindung in axialer Richtung eine lineare oder eine konkave Kontur aufweisen. Im erstgenannten Fall ist der erste Dichtflächenabschnitt somit kegelmantelförmig ausgebildet. Dadurch kann auf konstruktiv einfache Weise eine fein abgestufte Entlastung/Belastung des Dichtkopfs entlang des ersten Dichtflächenabschnitts erreicht werden.

Der zweite Dichtflächenabschnitt kann nach der Erfindung in axialer Richtung zumindest abschnittsweise eine konkave Kontur aufweisen. Besonders bevorzugt weist der zweite Dichtflächenabschnitt dabei einen Krümmungsverlauf bzw. Radius auf, der zu einem Krümmungsverlauf bzw. Radius des Dichtkopfs korrespondierend bzw. komplementär ausgeführt ist. Dadurch kann sich der Dichtkopf großflächig an den Axialanschlag anlegen und abstützen. Lokalen Überbeanspruchungen, insbesondere Scherverletzungen des Dichtkopfs, kann dadurch entgegengewirkt werden. Darüber hinaus kann dadurch einem unerwünschten Verklemmen des Dichtkopfs an der Dichtfläche bei einem fallenden Betriebsdruck auf der Hochdruckseite entgegengewirkt werden, so dass sich der Dichtkopf in Richtung seiner nicht-druckbeaufschlagten Ausgangsstellung relativ zur Dichtfläche zurückschwenken kann. Der Radius des zweiten Dichtflächenabschnitts ist vorzugswiese kleiner gewählt, als ein fakultativer Radius des ersten Dichtflächenabschnitts.

Die Dichtfläche des zweiten Maschinenteils kann nach der Erfindung unmittelbar durch das zweite Maschinenteil, d.h. durch dessen Oberfläche, gebildet sein. Die geometrische Ausgestaltung der Dichtfläche kann jedoch in Abhängigkeit vom Material des zweiten Maschinenelements einen hohen Herstellungsaufwand erfordern und damit hohe Fertigungskosten verursachen. Ganz besonders bevorzugt ist die Dichtfläche deshalb zumindest teilweise, bevorzugt vollständig, durch ein Hülsenelement gebildet, das am bzw. auf dem zweiten Maschinenteil angeordnet bzw. befestigt ist. Dies bietet einerseits fertigungstechnische Vorteile und erlaubt andererseits geringere Fertigungskosten. So kann das Hülsenelement insbesondere aus einem hochwertigeren Material gefertigt sein, als das zweite Maschinenteil und dabei kostengünstig und mit einer hohen Maßhaltigkeit gefertigt werden. Bei dieser Bauart kann das Material des zweiten Maschinenteils zudem unabhängig bzw. weitgehend unabhängig von Anforderungen gewählt werden, wie diese an Gegenlaufflächen für Radialwellendichtringe gestellt werden. Das zweite Maschinenteil kann so beispielhaft aus einem Kunststoff oder aus einem Kunststoffverbundwerkstoff, beispielsweise einem Karbonfaserwerkstoff, bestehen.

Das Hülsenelement kann nach der Erfindung insbesondere aus Metall, bevorzugt einem einsatzgehärteten Stahl oder auch aus einem keramischen Material bestehen. Denkbar ist auch ein Hülsenelement aus einem, bevorzugt graphithaltigen, Verbundwerkstoff. Dadurch kann die Dichtungsanordnung auf einfache und kostengünstige Weise für unterschiedliche Einsatzbedingungen ausgelegt werden. Die Dichtungsanordnung weist dadurch eine besonders große Einsatzbreite auf.

Das Hülsenelement kann nach der Erfindung mit dem zweiten Maschinenteil verpresst, verschweißt, verlötet, verklebt sein. Vorstellbar ist beispielsweise auch, dass das Hülsenelement mit dem zweiten Maschinenteil verschraubt oder am zweiten Maschinenteil verrastet gehalten angeordnet ist

Nach einer besonders bevorzugten Weiterbildung der Erfindung ist das Hülsenelement über ein elastisch verformbares Zwischenelement oder mehrere elastisch verformbare Zwischenelemente am zweiten Maschinenteil gelagert bzw. angeordnet. Das Zwischenelement ist somit in radialer Richtung zwischen dem zweiten Maschinenteil und dem Hülsenelement angeordnet. Bei dieser Sandwichkonstruktion kann das Zwischenelement insbesondere ring- bzw. hülsenförmig und bedarfsweise mehrteilig ausgebildet sein. Durch den Einsatz eines solchen Zwischenelements kann einerseits die Montage des Hülsenelements weiter vereinfacht werden. Unregelmäßigkeiten des zweiten Maschinenteils in dem von dem Hülsenelement überdeckten Bereich können vom Zwischenelement ausgeglichen (kompensiert) werden, so dass sich kostenintensive Feinbearbeitungsverfahren des zweiten Maschinenteils erübrigen können. Dies ist für die Fertigungskosten der Dichtungsanordnung von Vorteil.

Zu beachten ist darüber hinaus, dass das Hülsenelement durch dessen Lagerung auf einem elastisch verformbaren Zwischenelement insgesamt mit einer geringeren Materialstärke ausgeführt werden kann, ohne dass dies zu funktionellen Einbußen der Dichtungsanordnung führt. So können dadurch für die Dichtfläche vereinfacht spröde bzw. amorphe Materialien, ggf. sogar in monokristalliner Ausführung, eingesetzt werden. Denkbar sind hier insbesondere Oxide mit Metall wie beispielsweise Siliziumdioxid (SiO₂) oder Aluminiumoxid (Al₂O₃). Dadurch kann eine mechanisch, thermisch sowie bedarfsweise chemisch hoch widerstandsfähige Gegenlauffläche mit überschaubarem Kostenaufwand bereitgestellt werden. Das Zwischenelement kann nach der Erfindung zähelastisch, oder auch gummielastisch verformbar sein. Nach der Erfindung können das Hülsenelement und das Zwischenelement bzw. Lagerteil unlösbar miteinander verbunden sein. Unter einer unlösbaren Verbindung wird dabei im klassischen Sinne eine nicht zerstörungsfrei lösbare Verbindung verstanden. Ein zähelastisch verformbares Zwischenelement erlaubt eine besonders einfache Montage des Hülsenelements auf dem zweiten Maschinenteil, insbesondere, wenn dieses in radialer Richtung mit dem Zwischenelement und dem zweiten Maschinenteil verpresst wird.

Der Dichtkopf des Radialwellendichtrings kann zumindest abschnittsweise eine sphärische, elliptische, insbesondere ovale, oder auch eine polygonale Querschnittsform aufweisen. Besonders bevorzugt ist der Dichtkopf ballig ausgebildet. Der Dichtkopf weist in diesem Fall eine im Querschnitt konvex ausgeformte Stirnseite auf. Der Dichtkopf kann bedarfsweise mehrere Dichtabschnitte aufweisen, die in axialer Richtung voneinander beabstandet angeordnet sind.

Der Dichtkopf und der Fußabschnitt sind unter konstruktiven Gesichtspunkten im einfachsten Fall über einen elastisch verformbaren Verbindungsabschnitt miteinander verbunden. Der Verbindungsabschnitt kann insbesondere in Form einer (Elastomer-)Membran ausgeführt sein. Besonders bevorzugt weist der Verbindungsabschnitt einen in radialer Richtung nicht-linearen Querschnittsverlauf auf. Durch einen solchermaßen ausgeformten Verbindungsabschnitt können zum einen Schwingungen des die Dichtfläche aufweisenden Maschinenteils sowie Unregelmäßigkeiten der Dichtfläche, wie diese auch erst im Betrieb der Dichtungsanordnung entstehen können, vom Verbindungsabschnitt nochmals zuverlässiger aufgenommen bzw. kompensiert werden. Dadurch kann einer lokalen Überbelastung des an der Dichtfläche anliegenden Dichtabschnitts des Dichtkopfs entgegengewirkt und ein nochmals zuverlässigeres Dichtvermögen des Radialwellendichtrings erreicht werden. Darüber hinaus kann dadurch eine besonders kompakte Bauweise des Radialwellendichtrings realisiert werden. Dies ist für die mögliche Einsatzbreite der Dichtungsanordnung vorteilhaft. Bildet der Verbindungsabschnitt mit zweien seiner Schenkel einen zur Hochdruckseite hin offenen Freiraum, so kann der Radialwellendichtring durch eine hochdruckseitige Druckbeaufschlagung der Dichtungsanordnung druckaktiviert werden. Der Dichtkopf wird mit anderen Worten druckproportional zu einem auf der Hochdruckseite herrschenden Betriebsdruck p_{w} gegen die Dichtfläche gepresst. Dadurch kann der erste Dichtflächenabschnitt der Dichtfläche bei Bedarf auch zur Bewegungsachse steiler verlaufend ausgeformt sein, um die aus der auf das Fluid einwirkenden Zentrifugalkraft abgeleitete Fluidströmung axial in Richtung auf die Hochdruckseite dem Bedarf entsprechend einstellen zu können. Dies ist insbesondere bei andern Fluiden als Schmieröl, beispielsweise bei Gasen, vorteilhaft. Der Verbindungsabschnitt weist dazu vorteilhaft (zumindest abschnittsweise) einen bügel- bzw. mäanderförmigen, d. h. U- oder V-förmigen, Querschnittsverlauf auf.

Nach einer Weiterbildung der Erfindung weist der Verbindungsabschnitt mehrere materialgeschwächte Bereiche auf, die in Umfangsrichtung des Radialwellendichtrings, bevorzugt regelmäßig, voneinander beabstandet hintereinanderliegend angeordnet sind. Durch die in Umfangsrichtung des Radialwellendichtrings vorgesehenen Materialschwächungen des elastisch, bevorzugt gummielastisch, verformbaren Verbindungsabschnitts kann eine besonders effiziente Schmierung und damit Kühlung der Dichtzone, d.h. der Kontaktzone des Dichtungsabschnitts und der Dichtfläche, erreicht werden. Dadurch kann beispielsweise der Entstehung von Ölkohle im Bereich der dynamischen Dichtzone der Dichtungsanordnung entgegengewirkt werden. Die Materialschwächungen des Verbindungsabschnitts bieten dem Dichtkopf im Betrieb der Dichtungsanordnung einerseits eine geringere Momentenabstützung, als die nicht-materialgeschwächten Bereiche des Verbindungsabschnitts. Diese sind den Materialschwächungen in Umfangsrichtung des Radialwellendichtrings zwischengeschaltet angeordnet. Bei einer Relativbewegung der beiden Maschinenteile wird dadurch an der Dichtfläche in Umfangsrichtung ein zum räumlichen Verteilungsmuster der materialgeschwächten Bereiche und der nicht-materialgeschwächten Bereiche des Verbindungsabschnitts korrespondierender Kontaktpressungsverlauf des Dichtabschnitts an der Dichtfläche bewirkt. Die in Umfangsrichtung des Radialwellendichtrings wechselnde bzw. inkonstante Kontakt(flächen)pressung des Dichtabschnitts des Dichtkopfs ermöglicht dabei eine verbesserte Schmierung der verschleißgefährdeten Dichtabschnitts durch das auf der Hochdruckseite des Dichtspalts bzw. der Dichtungsanordnung angeordnete Fluid. Dies, ohne das Dichtverhalten des Radialwellendichtrings dadurch negativ zu beeinflussen.

Wie vorstehend bereits erläutert wurde, kann die für das Dichtvermögen des Radialwellendichtrings maßgebliche vorgespannt dichtende Anlage des Dichtkopfs an der Dichtfläche gänzlich oder zumindest teilweise durch den Verbindungsabschnitt bewirkt sein. In beiden Fällen wird also der Dichtkopf durch den Verbindungsabschnitt, der zwangsläufig über den Fußabschnitt an dem die Dichtungshaltestruktur aufweisenden Maschinenteil abgestützt ist, in radialer Richtung gegen die Dichtfläche gepresst. Der Fußabschnitt liegt dabei an dem die Dichtungshaltestruktur aufweisenden Maschinenteil in axialer oder in radialer Richtung statisch dichtend an. Weist der Verbindungsabschnitt dabei die vorgenannten Materialschwächungen auf, so wird der zum räumlichen Verteilungsmuster der Materialschwächungen korrespondierende inkonstante/wechselnde Kontaktpressungsverlauf des Dichtabschnitts an der Dichtfläche weiter verstärkt. Der Dichtabschnitt des Dichtkopfs liegt dabei (im Wesentlichen) mit denjenigen Dichtabschnittsbereichen, die in einer zur Dichtfläche orthogonalen Richtung mit den Materialschwächungen des Verbindungsabschnitts fluchten, mit einer kleineren Kontakt(flächen)pressung an der Dichtfläche an, als mit denjenigen Bereichen, die mit den nicht-geschwächten Bereichen des Verbindungsabschnitts in einer zur Bewegungsachse radialen Richtung fluchten. Dadurch kann die Selbstschmierung der Dichtungsanordnung im Bereich der Dichtzone, d.h. eine ausreichende Schmierschicht im Bereich der Berührzone zwischen dem Dichtkopf und der Dichtfläche, mithin die Lebensdauer des Radialwellendichtrings, nochmals weiter verbessert werden.

Der Verbindungsabschnitt weist nach der Erfindung in den materialgeschwächten Bereichen vorzugsweise jeweils eine Dicke auf, die weniger als 90%, insbesondere weniger als 50% der maximalen Dicke des Verbindungsabschnitts beträgt. Die materialgeschwächten Bereiche sind also keine Durchgangsausnehmungen bzw. Durchlässe des Verbindungsabschnitts, sondern dichten die Hochdruckseite allzeit gegenüber einem Durchtritt des Fluids auf die Niederdruckseite ab. Der Verbindungsabschnitt kann am Dichtkopf mittig oder alternativ randseitig, insbesondere am niederdruckseitigen Rand des Dichtkopfs, angeformt sein. Im erstgenannten Fall erstreckt sich somit der Dichtkopf bei einem bezüglich der Bewegungsachse radial dichtenden Radialwellendichtring in axialer Richtung und bei einem axial dichtenden Radialwellendichtring in radialer Richtung zu beiden Seiten über den Anbindungsbereich des Verbindungsabschnitts seitlich weg. Dadurch kann der Dichtabschnitt des Dichtkopfs auf einfache Weise umlaufend in radialer Richtung gegen die Dichtfläche gepresst werden. In beiden Fällen wird am Dichtkopf Raum für weitere Funktions- bzw. Anbauteile des Radialwellendichtrings geschaffen.

So kann der Dichtkopf nach einer Ausführungsform der Erfindung zumindest eine Haltestruktur aufweisen, in oder an der ein (gummi)elastisch verformbares Vorspannelement, insbesondere eine Wurmfeder oder ein Elastomerring, gehalten angeordnet ist, durch das der Dichtkopf gegen die Dichtfläche vorgespannt wird. Ein solches Vorspannelement kann nach der Erfindung zusätzlich oder alternativ zu einer durch den Verbindungsabschnitt vermittelten Vorspannung des Dichtkopfs gegen die Dichtfläche vorgesehen sein. Die Haltestruktur ist nach der Erfindung bevorzugt an seiner dem Fußabschnitt zuweisenden Rückseite des Dichtkopfs angeordnet. Unter fertigungstechnischen Aspekten sowie auch im Hinblick auf eine einfache und sichere Montage des Radialwellendichtrings ist die Haltestruktur vorteilhaft als eine Ringnut ausgebildet. Weist der Dichtkopf nur eine solche Haltestruktur auf, so ist diese vorteilhaft auf der Hochdruckseite des Dichtkopfs positioniert. Dadurch kann das Dichtvermögen des Radialwellendichtrings nochmals weiter verbessert werden.

Nach einer bevorzugten Weiterbildung der Erfindung weist der Dichtkopf, bevorzugt an seiner dem Fußabschnitt zuweisenden Rückseite, zu beiden Seiten des Verbindungsabschnitts, d. h. niederdruckseitig und hochdruckseitig, eine solche Haltestruktur auf. In/an den beiden Haltestrukturen kann nach einer ersten Ausführungsalternative jeweils ein (gummi)elastisch verformbares Vorspannelement für den Dichtkopf, insbesondere eine Wurmfeder oder ein Elastomerring, gehalten angeordnet sein. Durch die voneinander beabstandet angeordneten Vorspannelemente kann der Dichtkopf mit seinem Dichtabschnitt besonders zuverlässig in radialer Richtung an die Dichtfläche angepresst werden. Nach einer zweiten Ausführungsalternative kann in/an der niederdruckseitig angeordneten Haltestruktur ein Stützring und in/an der hochdruckseitigen Haltestruktur ein elastisch verformbares Vorspannelement, insbesondere eine Wurmfeder oder ein Elastomerring, gehalten angeordnet sein.

Der Stützring ist im Vergleich zum Material des Radialwellendichtrings bzw. des Dichtkopfs in sich biegesteif, d. h. in radialer und in axialer Richtung formstabil. Der Stützring kann niederdruckseitig eine axiale bzw. radiale Abstützung des Dichtkopfs und/oder des Verbindungsabschnitts des Radialwellendichtrings bewirken und so die Funktionsfähigkeit des Radialwellendichtrings selbst bei hohen Betriebsdrücken des Fluids gewährleisten. Durch das auf der Hochdruckseite angeordnete Vorspannelement kann im Betriebseinsatz der Dichtungsanordnung jederzeit eine ausreichende Kontaktpressung des Dichtkopfs gegen die Dichtfläche ermöglicht werden.

Die Lebensdauer des Radialwellendichtrings kann nach der Erfindung dadurch nochmals weiter verbessert werden, dass der Radialwellendichtring hochdruckseitig, insbesondere an seiner Stirnseite bzw. seiner der Hochdruckseite zuweisenden Seitenflanke, mit zumindest einer Tribostruktur, d.h. einem Strömungselement versehen ist, durch das bei einer Relativbewegung der beiden Maschinenteile im Dichtspalt eine Fluidströmung bewirkt ist, derart, dass der Dichtkopf hochdruckseitig im Bereich seines Dichtabschnitts unmittelbar von der Fluidströmung oder von zum Dichtkopf nachströmendem Fluid angeströmt wird. Durch das Strömungselement kann mithin im Betrieb der Dichtungsanordnung unmittelbar oder mittelbar eine zur dynamischen Dichtzone der Dichtungsanordnung hin gerichtete oder von dieser weggerichtete Fluidströmung des auf der Hochdruckseite angeordneten Fluids erzeugt werden.

Das Strömungselement kann nach der Erfindung insbesondere als eine Nut des Radialwellendichtrings ausgebildet sein. Eine solche Nut kann bei den in der Dichtungsherstellung eingesetzten Urformverfahren, insbesondere im Wege des Spritzgießens, einfach und kostengünstig erzeugt werden. Nach einer alternativen Ausführungsform der Erfindung kann das Strömungselement auch als eine Durchgangsbohrung des Radialwellendichtrings bzw. Dichtungskopfs, ausgeführt sein. Die vorgenannte Nut ist nach der Erfindung vorzugsweise beidenends offen ausgeführt.

Für einen besonders effizienten Spüleffekt im Bereich der Dichtzone kann sich die Nut bzw. die Durchgangsbohrung nach der Erfindung von der Hochdruckseite in Richtung auf die Niederdruckseite bzw. den Dichtabschnitt des Dichtkopfs zumindest abschnittsweise in ihrem vom Fluid durchströmbaren Querschnitt verjüngen. Dadurch kann die Nut im Sinne einer Düse wirken und das Fluid in Richtung auf den Dichtabschnitt nochmals wirksamer beschleunigen. Das Fluid kann dadurch über die Nut dem Dichtabschnitt mit einer großen Strömungsgeschwindigkeit zugeführt werden. Insgesamt kann dadurch der erwünschte Spüleffekt des Fluids nochmals weiter gesteigert werden, so dass der Bildung von entstandener Ölkohle nochmals wirksamer vom Dichtabschnitt bzw. der Dichtfläche abgelöst und aus dem Dichtbereich entfernt werden kann.

Die Nut kann erfindungsgemäß auch als ein zur Hochdruckseite offener Blindkanal ausgeführt sein. In diesem Sonderfall wird das Fluid an dem der Niederdruckseite zuweisenden Ende der Nut mehr oder minder abrupt in Richtung auf die Dichtfläche umgelenkt. Die Nut kann dabei an ihrem der Niederdruckseite zuweisenden Ende eine rampenförmige Schrägfläche für das Fluid aufweisen, die zur Dichtfläche hin schräg verlaufend angeordnet ist.

Die Nut oder die Durchgangsbohrung können dichtabschnittsseitig mit einem ringförmigen Strömungskanal des Dichtkopfs fluidisch verbunden sein, d.h. in diesen ringförmigen Strömungskanal des Dichtkopfs münden. Dadurch kann der Dichtabschnitt in Umfangsrichtung vollständig auf der Hochdruckseite vom Fluid umspült werden. Dies ist für die Wärmeabfuhr im Bereich der Dichtzone von Vorteil. Auch wird dadurch eine nochmals weiter optimierte Spülung der Dichtzone erreicht. Der ringförmige Strömungskanal ist vorteilhaft (zur Niederdruckseite hin) durch den an der Dichtfläche anliegenden Dichtabschnitt des Dichtkopfs seitlich unmittelbar begrenzt.

Der Dichtabschnitt des Dichtkopfs kann einen Laufstreifen umfassen, der sich stirnseitig vom Dichtkopf wegerstreckt. Dieser Laufstreifen steht somit über die Kontur der Stirnseite des Dichtkopfs hervor. Der Laufstreifen kann gerundet, d.h. mit einem Radius, ausgeführt sein oder aber beiderseitig Dichtkanten aufweisen. Der Dichtstreifen ist nach der Erfindung bevorzugt mit einer durchgehenden, vorzugsweise makroskopisch unstrukturierten, Lauffläche versehen. Nach einer alternativen Ausführungsform kann der Dichtkopf mehrere solcher Laufstreifen aufweisen, die relativ zueinander seitlich versetzt am Dichtkopf angeordnet sind.

Nach einer bevorzugten Weiterbildung der Erfindung erstreckt sich das Strömungselement des Dichtkopfs vom Dichtkopf weg. Das Strömungselement ist somit im Sinne eines Profilfortsatzes des Dichtkopfs ausgeführt. Das Strömungselement ist dabei unter fertigungstechnischen Aspekten vorzugsweise am Dichtkopf unmittelbar angeformt. Dadurch ist das Strömungselement zugleich verliersicher am Dichtungskopf gehalten angeordnet. Das Strömungselement wirkt im Sinne einer Beschaufelung (Schaufel) des Dichtkopfs. Das Strömungselement kann dabei eine ovale, elliptische, polygonale, oder dreieckige Querschnittsform aufweisen. Auch eine Freiform-Querschnittsform im Sinne eines Flügelprofils ist denkbar. Die (Schub-)Wirkung des als Profilfortsatz des Radialwellendichtrings ausgebildeten Strömungselements ist durch eine entsprechende Bemaßung sowie Ausformung der vom Fluid anströmbaren bzw. im Betriebseinsatz angeströmten Fläche(n) des Strömungselements dem Bedarf entsprechend einstellbar. Durch eine geeignete Wahl der Steigung der Anströmfläche(n) des Strömungselements relativ zur Bewegungsachse bzw. relativ zum lokalen Radius des Radialwellendichtrings sowie einer möglichen Neigung der Anströmfläche(n) des Strömungselements kann Beschleunigung des Fluids durch das Strömungselement beeinflusst werden. Das Strömungselement kann auch bidirektional wirkend ausgebildet sein, d.h. in beiden Bewegungsrichtung der Maschinenteile relativ zueinander einen axial gerichteten Fluidstrom auf der Hochdruckseite des Dichtspalts bewirken.

Die Schmierung und Kühlung des Dichtabschnitts des Radialwellendichtrings kann erfindungsgemäß dadurch nochmals weiter verbessert werden, dass der Radialwellendichtring mit einer eine Vielzahl der vorgenannten Strömungselemente versehen ist. Dadurch kann zugleich einer thermischen Überbeanspruchung des Fluids und damit beispielsweise der Entstehung und Ablagerung/Einlagerung von Ölkohle am Dichtabschnitt des Radialwellendichtrings nochmals wirksamer entgegengewirkt werden. So können insbesondere ein oder mehrere nutförmige und/oder ein oder mehrere vom Radialwellendichtring wegstehende Strömungselemente miteinander kombiniert am Dichtungskopf angeordnet sein. Das bzw. die nutförmige(n) Strömungselement(e) können beispielsweise an der der Dichtfläche zuweisenden Stirnseite des Dichtkopfs und das bzw. die vom Dichtkopf wegstehende(n) Strömungselement(e) an einer Seitenflanke des Radialwellendichtrings bzw. des Dichtkopfs angeordnet sein. Insbesondere durch die vom Dichtkopf wegstehenden Strömungselemente kann zugleich eine unter thermischen Aspekten vorteilhafte Durchmischung des Fluids erreicht werden.

Die Mehrzahl von Strömungselementen kann in Umfangsrichtung des Radialwellendichtrings einreihig oder auch mehrreihig am Dichtkopf des angeordnet sein.

Zu beachten ist, dass der Radialwellendichtring niederdruckseitig Rückförderelemente bzw. -profile aufweisen kann, die am Dichtkopf angeordnet sind. Dadurch kann von der Hochdruckseite auf die Niederdruckseite gelangtes Fluid zum Dichtabschnitt des Dichtkopfs nochmals zuverlässiger auf die Hochdruckseite zurückbefördert und dadurch die Schmierung, Kühlung sowie auch das Rückschleppvermögen des Radialwellendichtrings nochmals weiter verbessert werden. Die Rückförderelemente können in einer zu den vorgenannten Strömungselementen des Radialwellendichtrings entsprechenden Weise nutförmig oder auch als Profilfortsätze ausgeformt sein.

Die Erfindung wird nachfolgend anhand von in der Zeichnung wiedergegebenen Ausführungsbeispielen näher erläutert.

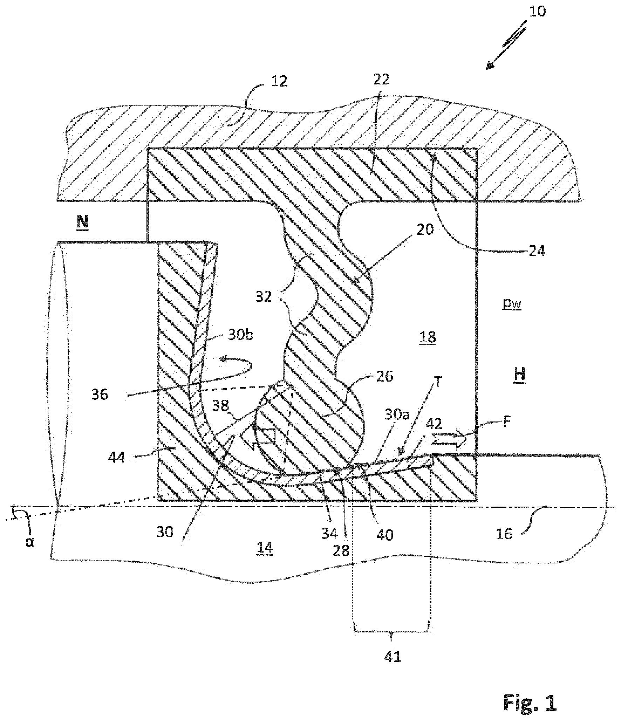

In der Zeichnung zeigen
- Fig. 1: eine Dichtungsanordnung mit zwei zueinander um eine Bewegungsachse bewegbaren Maschinenteilen, die mittels eines Radialwellendichtrings gegeneinander abgedichtet sind, der an einer Dichtfläche eines der beiden Maschinenteile in radialer Richtung dynamisch dichtend anliegt, wobei ein Dichtkopf des Radialwellendichtrings gegenüber der Dichtfläche auslenkbar ist und die Dichtfläche insgesamt muldenförmig ausgebildet ist, in einer geschnittenen Teilansicht;

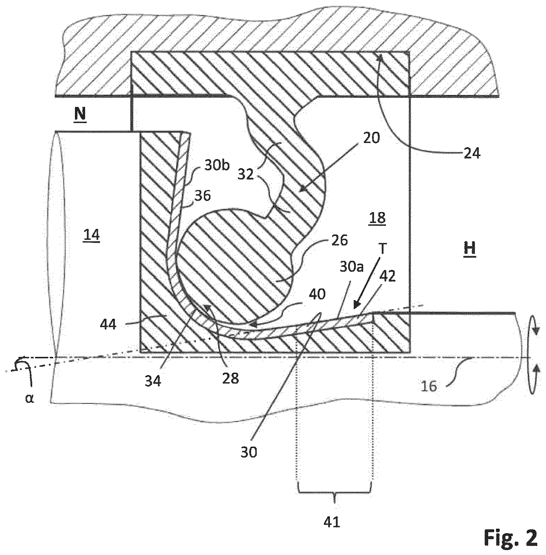

- Fig. 2: die Dichtungsanordnung gemäß Fig. 1 in einem anderen Betriebszustand, in dem die Hochdruckseite mit einem Betriebsdruck p_{w} druckbeaufschlagt ist und wobei der Betriebsdruck größer oder gleich einem Grenzbetriebsdruckwert pₗᵢₘᵢₜ ist, in einer geschnittenen Teilansicht;

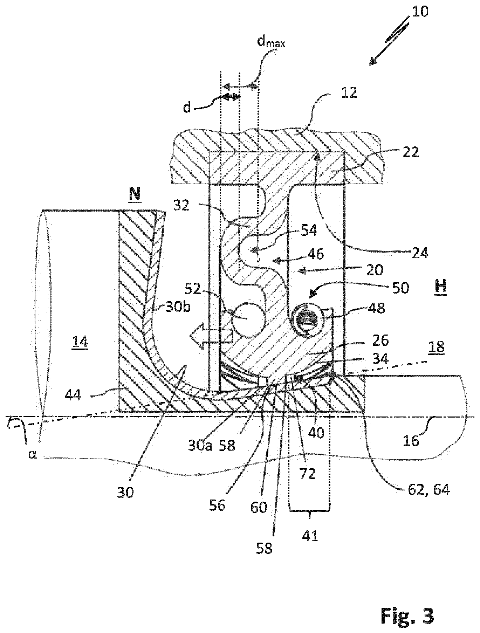

- Fig. 3: eine zu der Fig. 1 ähnliche Dichtungsanordnung, bei der der Radialwellendichtring zusätzlich hochdruckseitig eine Vielzahl an Strömungselemente aufweist, durch die bei einer Relativbewegung der Maschinenelemente eine axial gerichtete Strömung des auf der Hochdrucksete angeordneten Fluids bewirkt ist;

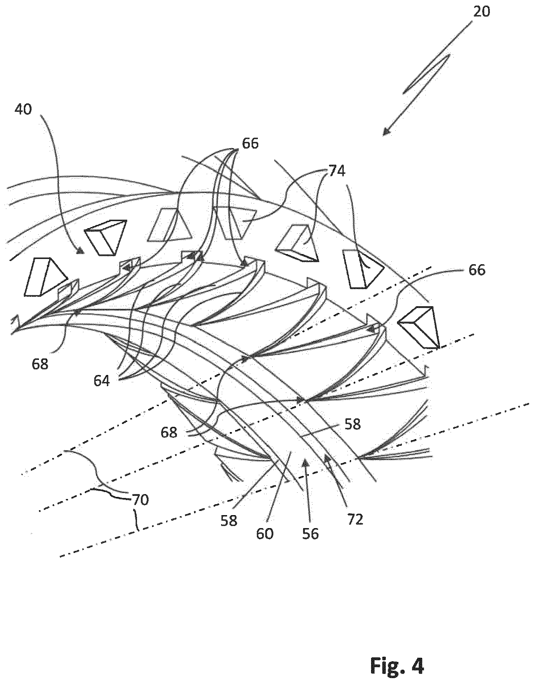

- Fig. 4: einen Radialwellendichtring, wie dieser bei der in Fig. 3 gezeigten Dichtungsanordnung zum Einsatz kommen kann, wobei der Radialwellendichtring nut- oder rillenförmige erste und in Form von Profilfortsätzen ausgebildete zweite Strömungselemente zum Erzeugen einer Axialströmung in dem auf der Hochdruckseite des Dichtspalts angeordneten Fluid aufweist, in einem freigestellten perspektivischen Ausschnitt;

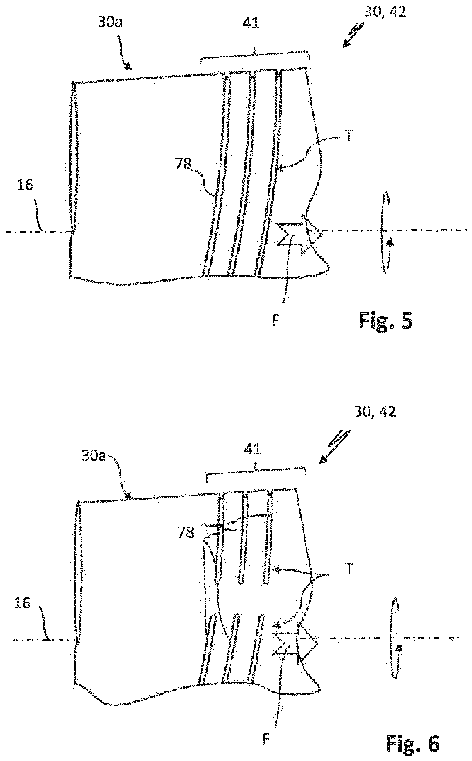

- Fig. 5: eine Dichtfläche des zweiten Maschinenteils einer Dichtungsanordnung gemäß Fig. 1, bei der ein niederdruckseitiger Dichtflächenabschnitt einen Randabschnitt aufweist, der mit einer nutartigen Tribostruktur versehen ist, durch die auf der Hochdruckseite bei einer Relativbewegung der beiden Maschinenteile eine axial gerichtete Fluidströmung erzeugbar bzw. unterstützbar ist;
- Fig. 6: ein zur Fig. 5 ähnliche Dichtfläche mit mehreren nutartigen Tribostrukturen, in einer ausschnittsweisen Seitenansicht;

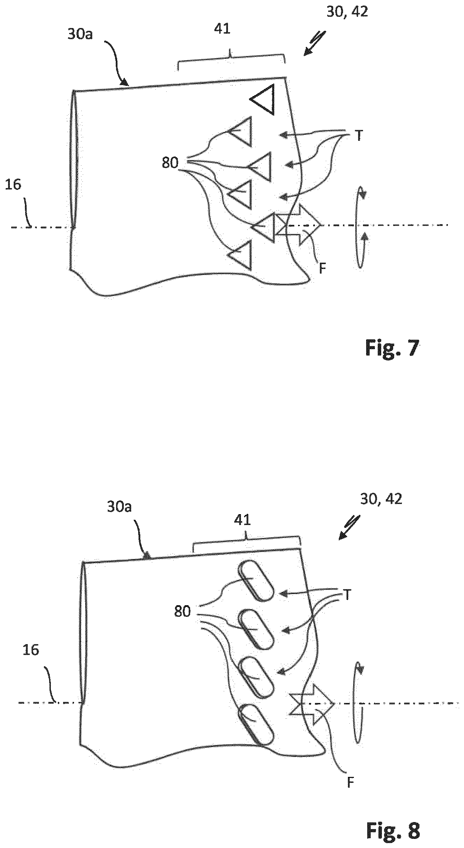

- Fig. 7: eine zur Fig. 5 ähnliche Dichtfläche mit mehreren Tribostrukturen, die sich in Form eines Profilfortsatzes in radialer Richtung von der Dichtfläche wegerstrecken, wobei die Tribostrukturen hier jeweils einen dreieckigen Querschnittsform aufweisen, in einer ausschnittsweisen Seitenansicht; und
- Fig. 8: eine zur Fig. 5 ähnliche Dichtfläche mit mehreren Tribostrukturen, die sich in Form eines Profilfortsatzes mit abgewandelter ovaler Querschnittsform in radialer Richtung von der Dichtfläche wegerstrecken, in einer ausschnittsweisen Seitenansicht.

In den **Fig. 1** und **2** ist eine Dichtungsanordnung **10** mit einem ersten und mit einem zweiten Maschinenteil **12, 14** gezeigt, die um eine mit **16** bezeichnete Bewegungsachse relativ zueinander rotierbar angeordnet sind. Zwischen den beiden Maschinenteilen 12, 14 ist ein Dichtspalt **18** ausgebildet. Der Dichtspalt weist eine abzudichtende Hochdruckseite H auf, in der ein mit einem Betriebsdruck **p_{w}** beaufschlagbares Fluid, insbesondere ein Schmierstoff, wie beispielsweise Öl, angeordnet ist. Die Hochdruckseite **H** ist mittels eines Radialwellendichtrings (RWDR) **20** gegenüber einer Niederdruckseite **N** des Dichtspalts abgedichtet.

Das Dichtungselement 20 kann insgesamt aus einem elastisch verformbaren Material, bevorzugt einem Elastomer, bestehen und ist vorzugsweise einstückig ausgeführt. Es versteht sich, dass in das Material des Dichtungselements 20 Stütz- oder Armierungsteile (nicht gezeigt) teilweise bzw. vollständig eingebettet sein können.

Ein Fußabschnitt **22** des Dichtelements 20 ist an einer Dichtungshaltestruktur **24,** hier einer Haltenut, des ersten Maschinenteils 12 gehalten angeordnet. Der Fußabschnitt 22 kann am ersten Maschinenteil 12 in radialer und/oder in axialer Richtung statisch dichtend anliegen. Der Fußabschnitt 22 ist hier in der Dichtungshaltestruktur 24 geklemmt gehalten angeordnet. Der Fußabschnitt 22 kann auch auf andere dem Fachmann geläufige Weise an dem die Dichtungshaltestruktur 24 aufweisenden Maschinenteil 12, 14 befestigt, beispielsweise mit diesem verstiftet oder verklebt, sein.

Das Dichtungselement 20 weist weiter einen Dichtkopf **26** auf. Der Dichtkopf liegt hier mit einem Dichtabschnitt **28** an einer Dichtfläche **30** des zweiten Maschinenteils 14 in radialer Richtung vorgespannt dichtend an. Der Dichtkopf dient somit einer dynamischen Abdichtung des Dichtspalts 18. Zu beachten ist, dass der als Radialwellendichtring gemäß Fig. 1 innendichtend oder aber in nicht näher gezeigter Weise außendichtend ausgeführt sein kann. Der Dichtkopf 28 und der Fußabschnitt 24 sind über einen gummielastisch verformbaren Verbindungsabschnitt **32** miteinander verbunden. Der Verbindungabschnitt 32 weist hier in einer zur Bewegungsachse 16 radialen Richtung einen nicht-linearen Querschnittsverlauf auf. Durch den Verbindungsabschnitt 32 kann zumindest teilweise oder, wie dies hier der Fall ist, auch alleinig die vorgespannt dichtende Anlage des Dichtkopfs 26 an der Dichtfläche 30 bewirkt sein. Der Dichtkopf 26 wird somit bei dem gezeigten Ausführungsbeispiel alleinig durch das dem Material des Verbindungsabschnitt 32 innenwohnende elastische Rückstellvermögen gegen die Dichtfläche 30 des zweiten Maschinenelements 14 vorgespannt. Der Verbindungsabschnitt 32 ist hier membranartig ausgeführt, so dass der Dichtkopf 26 in axialer Richtung am Fußabschnitt 22 flexibel angelenkt ist. Durch den in radialer Richtung nicht-linearen Querschnittsverlauf des Verbindungsabschnitts 32 ist der Dichtkopf 26 zudem in einer zur Bewegungsachse 16 radialen Richtung relativ zum ersten Maschinenelement 12 federnd gelagert. Dadurch kann der Radialwellendichtring 20 eine Exzentrizität des zweiten Maschinenteils 14 kompensieren, ohne dass es zu einer lokalen Überbeanspruchung des Dichtkopfs 26 im Kontaktflächenbereich des Dichtkops 26 und der Dichtfläche 30 kommt. Der Dichtkopf 26 des Radialwellendichtrings 20 weist hier eine ballig ausgestaltete Querschnittform mit einer konvex ausgeführten Stirnseite **34** auf. Es versteht sich, dass der Dichtkopf 26 auch eine andere, beispielsweise eine ovale, elliptische, polygonale oder Freiform-Querschnittsform aufweisen kann.

Die Dichtfläche 30 weist eine besondere geometrische Ausgestaltung auf. So umfasst die Dichtfläche 30 einen an die Hochdruckseite H angrenzenden ersten Dichtflächenabschnitt **30a** und einen sich in axialer Richtung daran anschließenden und an die Niederdruckseite N angrenzenden zweiten Dichtflächenabschnitt **30b.** Die beiden Dichtflächenabschnitte 30a, 30b gehen stufenfrei ineinander über. Der erste Dichtflächenabschnitt 30a erstreckt sich axial in Richtung auf die Niederdruckseite N von der Dichtungshaltestruktur 24 weg und schließt dabei (über seine gesamte Längserstreckung) mit der Bewegungsachse 16 einen spitzen Winkel α ein. Die Dichtfläche 30 ist somit im Bereich ihres ersten Dichtflächenabschnitts 30a konusmantelförmig ausgeführt. Mit anderen Worten weist der erste Dichtflächenabschnitt 30a in axialer Richtung eine lineare Kontur auf. Der zweite Dichtflächenabschnitt 30b ist in Richtung auf die Niederdruckseite N, hier gekrümmt, radial in Richtung auf die Dichtungshaltestruktur 24 des ersten Maschinenteils 12 verlaufend angeordnet. Dieser zweite Dichtflächenabschnitt bildet einen Axialanschlag **36** für den Dichtkopf 16. Ein Radius R des zweiten Dichtflächenabschnitts ist mit **38** bezeichnet. Der zweite Dichtflächenabschnitt 28 weist somit eine konkave Kontur auf.

Der Dichtkopf 16 liegt an bei Beaufschlagung der Hochdruckseite H des Dichtspalts mit einem Betriebsdruck p_{w}, der kleiner ist, als ein vorgegebener Grenzbetriebsdruckwert **pₗᵢₘᵢₜ** an dem ersten Dichtflächenabschnitt 30a der Dichtfläche 30 an. Bei einem Betriebsdruck p_{w}, der gleich oder größer als der Grenzbetriebsdruck pₗᵢₘᵢₜ ist, liegt der Dichtkopf hier zusätzlich in axialer Richtung dichtend an dem zweiten Dichtflächenabschnitt 30b der Dichtfläche 30 an. Dadurch ist selbst bei großen Betriebsdrücken ein zuverlässiges Dichtvermögen des Radialwellendichtrings 20 gewährleistet. Der zweite Dichtflächenabschnitt 30b erstreckt sich im Bereich seines niederdruckseitigen Endes derart weit radial in Richtung auf das erste Maschinenteil 12, dass der Dichtkopf 16 des Radialwellendichtrings 20 in axialer Richtung vollständig vom zweiten Dichtflächenabschnitt 30b überdeckt ist. Dadurch kann eine unerwünschte Extrusion des Dichtkopfs 16 in den Dichtspalt 18 selbst bei sehr großen Betriebsdrücken p_{w} verhindert werden.

Bei der in den Figuren 1 und 2 gezeigten Dichtungsanordnung 10 kann sich der Radialwellendichtring 20 gemeinsam mit dem die Dichtungshaltestruktur 24 aufweisenden Maschinenteil 12 relativ zur Dichtfläche 30 oder das die Dichtfläche 30 aufweisende Maschinenteil 14 relativ zum Radialwellendichtring 20 um die Bewegungsachse 16 drehen. Das auf der Hochdruckseite H angeordnete Fluid wird dabei durch dessen Reibung an der Dichtfläche 30 bzw. am ersten Maschinenelement 12 sowie seine ihm innewohnende Viskosität in eine um die Bewegungsachse 16 gerichtete Strömung versetzt (sogenannte Taylor-Couette-Strömung). Ist das die Dichtfläche 30 aufweisende Maschinenteil 12, 14 - bezogen auf die Bewegungsachse 16 der beiden Maschinenteile - das in radialer Richtung innenliegende und in Rotation versetzte Maschinenteil 12, 14, wie dies durch den Doppelpfeil verdeutlicht ist, so drängt das an der Dichtfläche 30 beschleunigte Fluid bei höheren Rotationsgeschwindigkeiten durch die Zentrifugalkraft F_{ZF} zusätzlich nach außen. Das die Dichtfläche 30 kontaktierende Fluid kann dabei aufgrund der zwischen dem Fluid und der Dichtfläche 30 gegebenen Adhäsionskräfte an dem hochdruckseitigen ersten Dichtflächenabschnitt 30a der Dichtfläche 30 axial in Richtung auf die Hochdruckseite gedrängt werden. In einer dazu entsprechenden Weise wird das Fluid bei einem in radialer Richtung außenliegend angeordneten und gegenüber dem zweiten Maschinenteil 14 rotierenden ersten Maschinenteil 12 durch seine Viskosität und die Wechselwirkung mit an der Dichtfläche 30 auftretenden Adhäsionskräften (nicht dargestellt) entlang des ersten Dichtflächenabschnitts 30a in Richtung der Hochdruckseite H strömen. Ist das die Dichtfläche 30 aufweisende Maschinenelement 12, 14 das in radialer Richtung außenliegend angeordnete Maschinenelement 12, 14, so wird das Fluid bei einer Rotation der beiden Maschinenelement 12, 14 relativ zueinander in Rotationsrichtung um die Bewegungsachse 16 strömen. Aufgrund der auf das Fluid einwirkenden Zentrifugalkraft Z_{FK} wird das Fluid nach radial außen bewegt und den ersten Dichtflächenabschnitt 30a der Dichtfläche 30 anströmen. Das Fluid wird sich in Richtung der Niederdruckseite N im Bereich des an der Dichtfläche 30 anliegenden Dichtkopfs 16 hochdruckseitig anstauen und verwirbeln. Das Fluid wird dadurch vorrangig axial in Richtung der Hochdruckseite H strömen.

Insbesondere bei großen Rotationsgeschwindigkeiten kann so aufgrund der geometrischen Formgebung der Dichtfläche 30 auf der Hochdruckseite H des Dichtspalts 18 eine axial gerichtet Fluidströmung erzeugt werden. Durch diese Fluidströmung wird der Dichtkopf 16 hochdruckseitig im Bereich seines an der Dichtfläche 30 anliegenden Dichtabschnitts 28 (Kontaktflächenbereichs), mithin im Bereich der dynamischen Dichtzone **40** von auf der Hochdruckseite H nachströmendem Fluid angeströmt. Dadurch wird die Dichtzone 40 im Betrieb der Dichtungsanordnung 10 mechanisch gespült, ggf. von Verunreinigungen befreit und die Schmierung sowie eine Wärmeabfuhr aus der Dichtzone 40 weiter verbessert. Kommt es aufgrund der auf das Fluid einwirkenden Zentrifugalkraft F_{ZK} zu ausreichend großen Turbulenzen im Fluid, wird dadurch eine für die Wärmeabfuhr günstige Durchmischung des Fluids auf der Hochdruckseite H erreicht. Auch können dadurch an der Dichtfläche 30 bzw. dem Dichtkopf 16 anhaftende Verunreinigungen abgelöst und aus der Dichtzone 40 weggespült werden. Insgesamt kann dadurch die Lebensdauer des Radialwellendichtrings 20 durch einfache konstruktive Maßnahmen weiter verbessert werden. Vorteilhaft kann der erste Dichtflächenabschnitt 30a der Dichtfläche 30 im Bereich seines hochdruckseitigen Randabschnitts **41** mit Schleuder- bzw. Tribostrukturen **T** versehen sein, durch die das Fluid in Pfeilrichtung **F** bei einer rotatorisch umlaufenden Relativbewegung der beiden Maschinenteile 12, 14 zur Hochdruckseite H hin beschleunigt wird. Dadurch kann der Bereich der Dichtzone 40 nochmals effektiver gespült, von Verunreinigungen befreit und die Schmierung sowie eine Wärmeabfuhr aus der Dichtzone 40 weiter verbessert werden. Der Dichtkopf 26 liegt im nicht-druckbelasteten Zustand an dem mit Tribostrukturen T versehenen hochdruckseitigen Randabschnitt 41 des ersten Dichtflächenabschnitts 30a vorzugsweise nicht an, um eine übermäßige Reibung des Dichtkopfs 26 an der Dichtfläche 30 sowie drohende Scherverletzungen des Dichtkopfs 26 zu vermeiden. Auf die Tribostrukturen T wird im Zusammenhang mit den Figuren 5 bis 9 im Detail näher eingegangen.

Im Betrieb der Dichtungsanordnung 10 ist eine im Bereich des dynamisch dichtenden Dichtkopfs 16 auftretende geringe Leckage des Fluids von der abzudichtenden Hochdruckseite H zur Niederdruckseite N nicht vollständig zu verhindern. Durch die Relativbewegung der beiden Maschinenteile 12, 14 wird das auf der Niederdruckseite N des Dichtkopfs 16 angeordnete (Leckage)Fluid durch das mit der auf das Fluid einwirkenden Zentrifugalkraft Z_{FK} wechselwirkende Adhäsionsverhalten entlang der Dichtfläche 30 in axialer Richtung bewegt. Das Fluid strömt größtenteils oder vollständig in axialer Richtung zur Dichtzone 40 hin. Dadurch ist auch eine niederdruckseitige Schmierung der Dichtzone 40 bzw. des Kontaktflächenbereichs des Dichtkopfs 16 und der Dichtfläche 30 sowie eine verbessertes Rückschleppverhalten des Radialwellendichtrings 20 auf die Hochdruckseite H begünstigt.

Die Dichtfläche 30 des zweiten Maschinenteils ist hier durch ein Hülsenelement **42** gebildet, das am zweiten Maschinenteil 14 befestigt ist. Das zweite Maschinenteil 14 kann dadurch aus einem kostengünstigen bzw. als Gegenlauffläche des Radialwellendichtrings 20 ungeeigneten Material bestehen. Auch kann sich eine weitere Feinbearbeitung der Oberfläche des zweiten Maschinenteils 14 erübrigen. Das Hülsenelement 42 kann in Abhängigkeit von dem jeweiligen Material des Hülsenelements 42 und des zweiten Maschinenteils 14 mit dem zweiten Maschinenteil verpresst, verschweißt, verlötet oder verklebt bzw. am zweiten Maschinenteil festgeschraubt oder mit diesem verrastet sein. Das Hülsenelement 42 besteht hier beispielhaft aus Metall, genauer aus einem einsatzgehärteten Stahl. Alternativ kann das Hülsenelement 42 beispielsweise aus einem keramischen Material bestehen. Auch ein Hülsenelement aus einem Verbundmaterial mit einer Trägerstruktur aus Metall oder Kunststoff und einer darauf angeordneten Gleitschicht die die Dichtfläche 30 bildet, etwa aus Aluminiumoxid, ist denkbar.

Das Hülsenelement 42 ist bei dem hier gezeigten Ausführungsbeispiel über ein elastisch verformbares Träger- oder Zwischenelement **44** am zweiten Maschinenteil 14 angeordnet. Das Hülsenelement kann insbesondere mit dem Zwischenelement 44 auf dem zweiten Maschinenteil aufgepresst und so an diesem drehfest sowie in axialer Richtung lagefixiert gehalten sein.

Der Radialwellendichtring 20 kann gemäß dem in **Fig. 3** gezeigten Ausführungsbeispiel einen bügel- bzw. mäanderförmigen Verbindungsabschnitt 32 aufweisen. Durch den Verbindungsabschnitt 32 ist in radialer Richtung innenseitig sowie außenseitig ein Freiraum **46** begrenzt. Unter einem Freiraum wird vorliegend ein Raumvolumen verstanden, in dem kein Bauteil der Dichtungsanordnung 10 angeordnet ist. Dieser Freiraum 46 umgreift den Dichtkopf 16 umfangsseitig. Der Freiraum 46 ist mit der Hochruckseite H der Dichtungsanordnung 10 fluidisch verbunden. Wird die Hochdruckseite H und damit auch der Freiraum 46 mit einem Betriebsdruck p_{w} druckbeaufschlagt, so kann der Dichtkopf 16 dadurch druckproportional zu dem auf der Hochdruckseite H jeweils herrschenden Druck Pw gegen die Dichtfläche 32 gepresst werden. Der Radialwellendichtring 20 ist dadurch insgesamt druckaktivierbar.

Der Dichtkopf 16 kann auch zumindest ein zum Radialwellendichtring separat ausgebildetes Vorspannelement **48** aufweisen, durch das der Dichtkopf 16 gegen die Dichtfläche gespannt ist. Hier weist der Dichtkopf 16 zu beiden Seiten des Verbindungsabschnitts 32 eine Nut **50** auf, in der hochdruckseitig ein elastisch verformbares Vorspannelement 48, hier eine Wurmfeder, und niederdruckseitig ein Stützring **52** gehalten angeordnet sind. Bei dieser Ausführungsform des Radialwellendichtrings 10 wird der Dichtkopf 16 somit zumindest teilweise durch das Vorspannelement 48 gegen die Dichtfläche 30 gepresst. Eine durch den ersten rampenförmigen Dichtflächenabschnitt 30a vermittelte Entlastung des Dichtkopfs 16 unter Druckbeaufschlagung der Hochdruckseite H wird durch das Vorspannelement 48 zumindest teilweise kompensiert.

Der Stützring 52 besteht aus einem Material mit einem im Vergleich zum Elastomermaterial des Radialwellendichtrings 20 größeren Elastizitätsmodul. Der Stützring 52 ist in sich formstabil und durch im Betrieb der Dichtungsanordnung 10 auftretende Kräfte nicht oder nur unwesentlich verformbar. Bei einer Druckbeaufschlagung der Hochdruckseite H kann sich der Dichtkopf 26 sowie auch der Verbindungsabschnitt 32 in einer zur Bewegungsachse 16 axialen Richtung am Stützring 52 abstützen. Darüber hinaus kann sich der Verbindungsabschnitt 32 in Richtung auf die Dichtfläche 30, d.h. in einer zur Bewegungsachse 16 radialen Richtung, am Stützring 52 abstützen. Dadurch kann der Radialwellendichtring 16 in axialer Richtung mechanisch stabilisiert und der Dichtkopf 26 vor einer übermäßigen Anpressung an die Dichtfläche 30 geschützt werden

Der Verbindungsabschnitt 32 kann bedarfsweise mehrere materialgeschwächte Bereiche **54** aufweisen, die in Umfangsrichtung des Dichtungselements, bevorzugt regelmäßig, voneinander beabstandet hintereinanderliegend angeordnet sind. Der Verbindungsabschnitt 32 weist in den materialgeschwächten Bereichen 54 jeweils eine Dicke d auf, die weniger als 90 %, bevorzugt weniger als 50% der Maximaldicke dₘₐₓ des Verbindungsabschnitts 32 in dessen ungeschwächten Bereichen (in Fig. 3 mit gestrichelter Linie dargestellt) beträgt. Zu beachten ist, dass der Verbindungsabschnitt 32 frei von Durchgangsausnehmungen oder dergleichen ist. Der Verbindungsabschnitt 32 ist mithin insgesamt fluidundurchlässig. Durch die materialgeschwächten Bereiche 54 des Verbindungsabschnitts 32 ist eine in Umfangsrichtung unsteter Kontaktpressungsverlauf zwischen dem Dichtkopf 26 und der Dichtfläche 30 bewirkt. Dadurch kann das Schmierverhalten der Dichtungsanordnung 10 im Bereich der Dichtzone 40 nochmals weiter verbessert werden.

Der Dichtabschnitt kann einen ringförmigen Laufstreifen **56** umfassen. Der Laufstreifen 56 erstreckt sich von der Stirnseite 34 des Dichtkopfs 26 zumindest im nicht-druckbeaufschlagten Betriebszustand des Radialwellendichtrings radial in Richtung auf die Dichtfläche 30 weg. Der Laufstreifen 56 kann gemäß Fig. 3 eine rechteckige Querschnittsform aufweisen. Die beiden Dichtkanten des Laufstreifens 56 sind mit **58** bezeichnet. Der Laufstreifen 56 kann eine durchgehende ringförmige Lauffläche **60** aufweisen, die vorzugsweise makroskopisch unstrukturiert ausgeführt ist. Vorteilhaft kann auch bei der in Fig. 3 gezeigten Dichtungsanordnung der hochdruckseitige Randabschnitt 41 des ersten Dichtflächenabschnitts 30a mit Tribostrukturen T versehen sein, um die Kühlung, Spülung und Schmierung des Kontaktflächenbereichs des Dichtkopfs 26 und der Dichtfläche nochmals weiter zu verbessern.

Für eine nochmals intensivere Kühlung, Schmierung und Spülung der dynamischen Dichtzone 40 kann der Dichtkopf 26 hochdruckseitig mit einem Profilsystem 62 versehen sein.

Das Profilsystem **62** umfasst hier eine Vielzahl von ersten Strömungselementen **64,** die als nutförmige Vertiefungen ausgeführt sind. Die ersten Strömungselemente 64 weisen gemäß der freigestellten Ansicht eines Radialwellendichtrings 20 gemäß **Fig. 4** eine der Hochdruckseite H zuweisende erste und eine der Niederdruckseite N zuweisende zweite Öffnung **66, 68** auf. Die Nuten sind gegenüber dem lokalen Radius **70** jeweils zumindest abschnittsweise zu einer Seite (in einer Drehrichtung der Maschinenteile 12, 14) hin schräg verlaufend angeordnet, sodass bei einer Relativbewegung der beiden Maschinenteile 12, 14 um die Bewegungsachse - hier bidirektional - eine Fluidströmung auf der Hochdruckseite H des Dichtspalts bewirkt ist, durch die der Dichtkopf 26 hochdruckseitig im Bereich oder seiner Dichtzone von dem Fluid mittelbar oder unmittelbar angeströmt wird. Die Nuten können sich in axialer Richtung zum Dichtabschnitt 28 des Dichtkopfs 26 hin zusätzlich verjüngen, um das Fluid dadurch in den Nuten noch effektiver zu beschleunigen. Zumindest ein Teil der ersten Strömungselemente 64 können einenends in einen ringförmigen Strömungskanal **72** des Dichtkopfs 26 münden. Der stirnseitige Strömungskanal 72 ist dabei vorzugsweise zur Niederdruckseite N hin durch den Dichtabschnitt 28 des Dichtkopfs 26 bzw. dessen Laufstreifen 58 unmittelbar seitlich begrenzt. Das Profilsystem 62 des Dichtkopfs 26 kann alternativ oder zusätzlich zu den ersten Strömungselementen 64 zweite Strömungselemente **74** aufweisen, die sich jeweils in Form von Profilvorsprüngen vom Dichtkopf 26 wegerstrecken. Diese zweiten Strömungselemente 74 bilden eine Beschaufelung des Dichtkopfs. Die zweiten Strömungselemente 74 können beispielsweise einen elliptischen, ovalen oder polygonalen Querschnittsform aufweisen.

Die ersten und zweiten Strömungselemente 64, 74 erlauben eine nochmals weiter verstärkte Anströmung des Dichtkopfs 16 durch das Fluid im Bereich seiner Stirnfläche 34 bzw. Dichtabschnitts 28. Eine verbesserte Spülung, Kühlung und Schmierung des Dichtkopfs 26 sind die Folge.

Der Dichtkopf 26 kann niederdruckseitig zudem Rückförderprofile **76** aufweisen, durch die einerseits das Rückschleppvermögen der Dichtungsanordnung 10 und andererseits von der Niederdruckseite N her eine zusätzliche Schmierung der des an der Dichtfläche 30 anliegenden Dichtabschnitts 28 des Dichtkopfs 26 erreicht werden kann. Die Rückförderprofile 76 können dabei in einer zu den auf der Hochdruckseite H des Radialwellendichtrings angeordneten ersten bzw. zweiten Strömungselementen 64, 74 korrespondierenden Weise ausgebildet sein.

In den **Figuren 5** bis **8** sind unterschiedliche Schleuder- bzw. Tribostrukturen gezeigt, wie diese der jeweilige hochdruckseitige Randabschnitt 41 des ersten Dichtflächensegments 30a der in den Figuren 1 bis 3 gezeigten Dichtungsanordnungen 10 aufweisen kann.

Gemäß Fig. 5 kann die Tribostruktur T eine helikale bzw. wendelförmige Nut **78** des die Dichtfläche bildenden Hülsenelements 42 bzw. des die Dichtfläche aufweisenden Maschinenteils 12, 14 umfassen bzw. als eine solche ausgebildet sein. Die Nut 78 kann sich vorteilhaft in ihrem lichten Querschnitt in Richtung auf die Hochdruckseite erweitern.

Die Tribostrukturen T des hochdruckseitigen Randabschnitts 41 des ersten Dichtflächensegments 30a der Dichtfläche 30 können auch mehrere Nuten 78 umfassen, wie dies in Fig. 6 gezeigt ist. Vorteilhaft ist zumindest ein Teil der Nuten 78 ist in axialer Richtung zueinander versetzt angeordnet. Auch können die Nuten unterschiedlich lang ausgeführt sein. Auch können sich die Nuten einen lichten/freien Querschnitt aufweisen, der sich axial in Richtung auf die Hochdruckseite H erweitert, um einem unerwünschten Staudruck des Fluids in den Nuten entgegenzuwirken. Die Nuten 78 sind in ihrer Projektion auf die Bewegungsachse 16 vorzugsweise zur Bewegungsachse 16 spitzwinklig schräg verlaufend angeordnet.

Die Tribostrukturen T des hochdruckseitigen Randabschnitts 41 der ersten Dichtflächenabschnitts der Dichtfläche 30 können sich gemäß den in den Figuren 7 und 8 gezeigten Ausführungsbeispielen auch in Form von Erhebungen oder Profilfortsätzen **80** des ersten Dichtflächenabschnitts 30a ausgeführt sein. Die Profilfortsätze 80 können gemäß Fig. 8 eine dreieckige Querschnittsform oder gemäß Fig. 9 auch eine (abgewandelte) elliptische Querschnittsform. Andere polygonale Querschnittsformen bzw. ein Freiform-Querschnitt sind denkbar.

## Patentansprüche

1. Dichtungsanordnung (10), umfassend:
- ein erstes Maschinenteil (12) und ein zweites Maschinenteil (14), die unter Ausbildung eines Dichtspalts (18) voneinander beabstandet angeordnet und um eine Bewegungsachse (16) relativ zueinander rotatorisch bewegbar sind;
- einen Radialwellendichtring (20) zum Abdichten einer mit einem Fluid druckbeaufschlagbaren Hochdruckseite H des Dichtspalts (18) gegenüber einer Niederdruckseite (N) des Dichtspalts, mit einem Fußabschnitt (22), der an einer Dichtungshaltestruktur (24) des ersten Maschinenteils (12) gehalten angeordnet ist und mit einem Dichtkopf, (26) der relativ zum Fußabschnitt (22) in axialer Richtung flexibel auslenkbar ist und welcher an einer Dichtfläche (30) des zweiten Maschinenteils (14) vorgespannt dichtend anliegt,
**dadurch gekennzeichnet, dass** die Dichtfläche (30) einen an die Hochdruckseite H angrenzenden ersten Dichtflächenabschnitt (30a) und einen sich in axialer Richtung daran anschließenden und an die Niederdruckseite N angrenzenden zweiten Dichtflächenabschnitt (30b) aufweist, wobei sich der erste Dichtflächenabschnitt (30a) in Richtung auf die Niederdruckseite (N) radial von der Dichtungshaltestruktur (24) wegerstreckt und mit der Bewegungsachse (16) einen spitzen Winkel α einschließt, wobei der Dichtkopf (26) bei Druckbeaufschlagung der Hochdruckseite H mit einem Betriebsdruck p_{w}, der kleiner ist, als ein vorgegebener Grenzbetriebsdruckwert pₗᵢₘᵢₜ an dem ersten Dichtflächenabschnitt (30a) anliegt, und
wobei sich der zweite Dichtflächenabschnitt (30b) in Richtung auf die Niederdruckseite N radial in Richtung auf die Dichtungshaltestruktur (24) des ersten Maschinenteils (12) erstreckt und einen Axialanschlag (36) für den Dichtkopf (26) bildet, an dem der Dichtkopf (26) bei einer Druckbeaufschlagung der Hochdruckseite H mit einem Betriebsdruck p_{w}, der gleich oder größer als der Grenzbetriebsdruckwert pₗᵢₘᵢₜ ist, in axialer Richtung dichtend anliegt.

2. Dichtungsanordnung nach Anspruch 1, **dadurch gekennzeichnet, dass** das erste Dichtflächensegment (30a) in axialer Richtung eine linear verlaufende oder eine konkave Kontur aufweist.

3. Dichtungsanordnung nach Anspruch 1 oder 2, **dadurch gekennzeichnet, dass** das zweite Dichtflächensegment (30b) in axialer Richtung zumindest abschnittsweise eine konkave Kontur aufweist, die bevorzugt einen zur Außenkontur des Dichtkopfs (26) des Radialwellendichtrings (20) korrespondierenden Radius R aufweist.

4. Dichtungsanordnung nach einem der vorhergehenden Ansprüche, **dadurch gekennzeichnet, dass** der erste Dichtflächenabschnitt (30a) einen hochdruckseitigen Randabschnitt (41) aufweist, der mit zumindest einer Tribostruktur T versehen ist, die bevorzugt in Form einer Nut (78) oder eines von der Dichtfläche radial wegstehenden Profilvorsprungs (80) ausgebildet ist.

5. Dichtungsanordnung nach einem der vorhergehenden Ansprüche, **dadurch gekennzeichnet, dass** die Dichtfläche (30) des zweiten Maschinenteils (14) zumindest abschnittsweise durch ein Hülsenelement (42) gebildet ist, das am zweiten Maschinenteil (14) befestigt ist.

6. Dichtungsanordnung nach Anspruch 5, **dadurch gekennzeichnet, dass** das Hülsenelement (42) mit dem zweiten Maschinenteil (14) verpresst, verschweißt, verlötet oder verklebt ist.

7. Dichtungsanordnung nach Anspruch 5 oder 6, **dadurch gekennzeichnet, dass** das Hülsenelement (42) zumindest teilweise aus Metall, einem Kunststoff oder aus einem keramischen Material besteht.

8. Dichtungsanordnung nach einem der Ansprüche 5 bis 7, **dadurch gekennzeichnet, dass** das Hülsenelement (42) über ein, zäh- oder gummielastisch verformbares Zwischenelement (44) am zweiten Maschinenteil (14) gelagert und/oder befestigt ist.

9. Dichtungsanordnung nach einem der vorhergehenden Ansprüche, **dadurch gekennzeichnet, dass** der Dichtkopf (26) des Radialwellendichtrings (20) zumindest abschnittsweise eine sphärische, ovale, elliptische, oder polygonale Querschnittsform aufweist.

10. Dichtungsanordnung nach einem der vorhergehenden Ansprüche, **dadurch gekennzeichnet, dass** der Radialwellendichtring (20) zumindest teilweise oder vollständig aus einem Elastomermaterial besteht.

11. Dichtungsanordnung nach einem der vorhergehenden Ansprüche, **dadurch gekennzeichnet, dass** der Radialwellendichtring (20) hochdruckseitig mit zumindest einem Strömungselement (64, 74) versehen ist, durch das bei einer Relativbewegung der beiden Maschinenteile (12, 14) um die Bewegungsachse eine Fluidströmung bewirkt ist, derart, dass der Dichtkopf (26) hochdruckseitig im Bereich seines Dichtabschnitts (28) vom Fluid angeströmt wird.

12. Dichtungsanordnung nach Anspruch 11, **dadurch gekennzeichnet, dass** das Strömungselement (64, 74) zumindest abschnittsweise als eine Nut und/oder als eine Durchgangsbohrung oder als ein, vorzugsweise am Dichtkopf (26) angeformter, Profilfortsatz des Radialwellendichtrings (20) ausgebildet ist, der sich vom Dichtkopf wegerstreckt.

13. Dichtungsanordnung nach Anspruch 12, **dadurch gekennzeichnet, dass** die Nut beidenends offen ausgeführt ist.

14. Dichtungsanordnung nach Anspruch 12 oder 13, **dadurch gekennzeichnet, dass** sich die Nut in ihrem vom Fluid durchströmbaren Querschnitt in Richtung auf den Dichtabschnitt (28) des Dichtkopfs (26) zumindest abschnittsweise verjüngt.

15. Dichtungsanordnung nach einem der Ansprüche 12 bis 14, **dadurch gekennzeichnet, dass** die Nut dichtabschnittsseitig mit einem ringförmigen Strömungskanal (72) des Dichtkopfs (26) fluidisch verbunden ist.

16. Dichtungsanordnung nach Anspruch 15, **dadurch gekennzeichnet, dass** der Strömungskanal (72) durch den an der Dichtfläche (30) anliegenden Dichtabschnitt (28) des Dichtkopfs (26) seitlich unmittelbar begrenzt ist.

17. Dichtungsanordnung nach einem der vorhergehenden Ansprüche, **dadurch gekennzeichnet, dass** der Dichtabschnitt (28) des Dichtkopfs (26) zumindest einen ringförmigen Laufstreifen (56) umfasst, der bevorzugt mit einer durchgehenden, vorzugsweise makroskopisch unstrukturierten, Lauffläche (60) versehen ist und/oder dass der Dichtabschnitt (28) stirnseitig zumindest eine ringförmige Profilrille aufweist.

18. Dichtungsanordnung nach Anspruch 11, **dadurch gekennzeichnet, dass** das Strömungselement (64, 74) eine ovale, elliptische, kreisrunde, polygonale oder dreieckige Querschnittsform aufweist.

19. Dichtungsanordnung nach einem der Ansprüche : 11 bis 16 und 18, **dadurch gekennzeichnet, dass** der Radialwellendichtring (20) mit einer eine Vielzahl von Strömungselementen (64, 74) versehen ist.

20. Dichtungsanordnung nach Anspruch 19, **dadurch gekennzeichnet, dass** die Strömungselemente (64, 74) in Umfangsrichtung des Radialwellendichtrings (20) hintereinander aufgereiht am Dichtkopf (26) angeordnet sind.

21. Dichtungsanordnung nach einem der vorhergehenden Ansprüche, **dadurch gekennzeichnet, dass** der Dichtkopf (26) mit einem elastisch verformbaren Vorspannelement (48) und/oder mit einem Stützring (52) versehen ist.

## Claims

1. Sealing arrangement (10), comprising:
- a first machine part (12) and a second machine part (14), which are arranged at a distance from one another to form a sealing gap (18) and are movable relative to one another in a rotational manner about a movement axis (16);
- a radial shaft sealing ring (20) for sealing a high-pressure side H of the sealing gap (18), which can be pressurized with a fluid, against a low-pressure side (N) of the sealing gap, having a foot portion (22) which is held on a seal holding structure (24) of the first machine part (12) and having a sealing head (26) which can be flexibly deflected in the axial direction relative to the foot portion (22) and which bears in a prestressed sealing manner on a sealing surface (30) of the second machine part (14), **characterized in that** the sealing surface (30) has a first sealing surface portion (30a) adjoining the high-pressure side H and a second sealing surface portion (30b) adjoining it in the axial direction and adjoining the low-pressure side N, wherein the first sealing surface portion (30a) extends radially away from the seal holding structure (24) in the direction of the low-pressure side (N) and encloses an acute angle α with the axis of movement (16), wherein the sealing head (26) is applied to the first sealing surface portion (30a) when the high-pressure side H is pressurized with an operating pressure p_{w} that is less than a predetermined limit operating pressure value pₗᵢₘᵢₜ, and wherein the second sealing surface portion (30b) extends radially in the direction of the seal holding structure (24) of the first machine part (12) in the direction of the low-pressure side N and forms an axial stop (36) for the sealing head (26) on which the sealing head (26) is applied in a sealing manner in the axial direction when the high-pressure side H is pressurized with an operating pressure p_{w} that is equal to or greater than the limit operating pressure value pₗᵢₘᵢₜ.

2. Sealing arrangement according to claim 1, **characterized in that** the first sealing surface segment (30a) has a linearly extending or a concave contour in the axial direction.

3. Sealing arrangement according to either claim 1 or claim 2, **characterized in that** the second sealing surface segment (30b) has, at least in portions, a concave contour in the axial direction, which contour preferably has a radius R corresponding to the outer contour of the sealing head (26) of the radial shaft sealing ring (20).

4. Sealing arrangement according to any of the preceding claims, **characterized in that** the first sealing surface portion (30a) has an edge portion (41) on the high-pressure side, which portion is provided with at least one tribostructure T which is preferably in the form of a groove (78) or a profile projection (80) that protrudes radially from the sealing surface.

5. Sealing arrangement according to any of the preceding claims, **characterized in that** the sealing surface (30) of the second machine part (14) is formed at least in portions by a sleeve element (42) which is attached to the second machine part (14).

6. Sealing arrangement according to claim 5, **characterized in that** the sleeve element (42) is pressed, welded, soldered or glued to the second machine part (14).

7. Sealing arrangement according to either claim 5 or claim 6, **characterized in that** the sleeve element (42) consists at least in part of metal, a plastics material or a ceramic material.

8. Sealing arrangement according to any of claims 5 to 7, **characterized in that** the sleeve element (42) is mounted on and/or attached to the second machine part (14) via an intermediate element (44) that can be deformed in a viscoplastic or rubber-elastic manner.

9. Sealing arrangement according to any of the preceding claims, **characterized in that** the sealing head (26) of the radial shaft sealing ring (20) has, at least in portions, a spherical, oval, elliptical or polygonal cross-sectional shape.

10. Sealing arrangement according to any of the preceding claims, **characterized in that** the radial shaft sealing ring (20) consists at least in part or completely of an elastomer material.

11. Sealing arrangement according to any of the preceding claims, **characterized in that** the radial shaft sealing ring (20) is provided on the high-pressure side with at least one flow element (64, 74) which, in the event of a relative movement of the two machine parts (12, 14) about the movement axis, causes a fluid flow such that fluid flows through the sealing head (26) on the high-pressure side in the region of the sealing portion (28) thereof.

12. Sealing arrangement according to claim 11, **characterized in that** the flow element (64, 74) is designed at least in portions as a groove and/or as a through hole or as a profile extension of the radial shaft sealing ring (20) which is preferably integrally formed on the sealing head (26) and extends away from the sealing head.

13. Sealing arrangement according to claim 12, **characterized in that** the groove is open at both ends.

14. Sealing arrangement according to either claim 12 or claim 13, **characterized in that** the cross section of the groove through which fluid can flow tapers at least in portions in the direction of the sealing portion (28) of the sealing head (26).

15. Sealing arrangement according to any of claims 12 to 14, **characterized in that** the groove is fluidically connected on the sealing portion side to an annular flow channel (72) of the sealing head (26).

16. Sealing arrangement according to claim 15, **characterized in that** the flow channel (72) is directly delimited laterally by the sealing portion (28) of the sealing head (26) resting against the sealing surface (30).

17. Sealing arrangement according to any of the preceding claims, **characterized in that** the sealing portion (28) of the sealing head (26) comprises at least one annular running strip (56) which is preferably provided with a continuous, preferably macroscopically unstructured, running surface (60), and/or **in that** the sealing portion (28) has at least one annular profile groove on the end face.

18. Sealing arrangement according to claim 11, **characterized in that** the flow element (64, 74) has an oval, elliptical, circular, polygonal or triangular cross-sectional shape.

19. Sealing arrangement according to any of claims 11 to 16 and 18, **characterized in that** the radial shaft sealing ring (20) is provided with a plurality of flow elements (64, 74).

20. Sealing arrangement according to claim 19, **characterized in that** the flow elements (64, 74) are arranged in a row on the sealing head (26) in the circumferential direction of the radial shaft sealing ring (20).

21. Sealing arrangement according to any of the preceding claims, **characterized in that** the sealing head (26) is provided with a resiliently deformable prestressing element (48) and/or with a support ring (52).

## Revendications

1. Ensemble d'étanchement (10) comprenant :
- une première partie (12) de machine et une seconde partie (14) de machine, disposées à distance l'une de l'autre en réservant un interstice d'étanchement (18), et pouvant être animées de mouvements rotatoires l'une par rapport à l'autre autour d'un axe de mouvement (16) ;
- une bague ondulée (20) d'étanchement radial, qui est conçue pour assurer l'étanchéité d'un côté haute pression (H) de l'interstice d'étanchement (18), pouvant être sollicité par une pression au moyen d'un fluide, vis-à-vis d'un côté basse pression (N) dudit interstice d'étanchement, et est munie d'une région de base (22) agencée avec retenue sur une structure (24) de maintien de garniture d'étanchement sur la première partie (12) de machine, et d'une tête d'étanchement (26) qui peut être déviée de manière flexible dans le sens axial, par rapport à ladite région de base (22), et est en applique de manière étanche, avec précontrainte, contre une surface d'étanchement (30) de la seconde partie (14) de machine,
**caractérisé par le fait que**
la surface d'étanchement (30) comprend une première zone (30a) limitrophe du côté haute pression (H), et une seconde zone (30b) qui s'y rattache dans le sens axial et est limitrophe du côté basse pression (N), sachant que ladite première zone (30a) de la surface d'étanchement s'étend radialement en direction dudit côté basse pression (N), au-delà de la structure (24) de maintien de garniture d'étanchement,
et décrit un angle aigu α avec l'axe de mouvement (16),
sachant que la tête d'étanchement (26) est en applique contre la première zone (30a) de la surface d'étanchement (30) lors d'une sollicitation du côté haute pression (H) par une pression de service p_{w} inférieure à une valeur pₗᵢₘᵢₜ de pression de service limite préétablie, et
sachant que la seconde zone (30b) de ladite surface d'étanchement (30) pointe radialement vers le côté basse pression (N), en direction de ladite structure (24) de maintien de garniture d'étanchement sur ladite première partie (12) de machine, et forme une butée axiale (36) qui est dédiée à la tête d'étanchement (26) et contre laquelle ladite tête d'étanchement (26) est en applique de manière étanche, dans le sens axial, lors d'une sollicitation dudit côté haute pression (H) par une pression de service p_{w} égale ou supérieure à la valeur pₗᵢₘᵢₜ de pression de service limite.

2. Ensemble d'étanchement selon la revendication 1, **caractérisé par le fait que** le premier segment (30a) de la surface d'étanchement présente, dans le sens axial, un profil à tracé linéaire ou concave.

3. Ensemble d'étanchement selon la revendication 1 ou 2, **caractérisé par le fait que** le second segment (30b) de la surface d'étanchement présente dans le sens axial, au moins par zones, un profil concave muni, de préférence, d'un rayon R concordant avec le profil extérieur de la tête d'étanchement (26) de la bague ondulée (20) d'étanchement radial.

4. Ensemble d'étanchement selon l'une des revendications précédentes, **caractérisé par le fait que** la première zone (30a) de la surface d'étanchement comporte une région marginale (41) située côté haute pression et pourvue d'au moins une tribostructure T réalisée, de préférence, sous la forme d'une rainure (78) ou d'une saillie profilée (80) dépassant radialement au-delà de ladite surface d'étanchement.

5. Ensemble d'étanchement selon l'une des revendications précédentes, **caractérisé par le fait que** la surface d'étanchement (30) de la seconde partie (14) de machine est constituée, au moins par zones, d'un élément (42) formant douille et fixé à ladite seconde partie (14) de machine.

6. Ensemble d'étanchement selon la revendication 5, **caractérisé par le fait que** l'élément (42) formant douille est rattaché à la seconde partie (14) de machine par emmanchement à force, soudage, brasage ou collage.

7. Ensemble d'étanchement selon la revendication 5 ou 6, **caractérisé par le fait que** l'élément (42) formant douille consiste au moins partiellement en un métal, en une matière plastique ou en un matériau céramique.

8. Ensemble d'étanchement selon l'une des revendications 5 à 7, **caractérisé par le fait que** l'élément (42) formant douille est monté, et/ou fixé sur la seconde partie (14) de machine par l'intermédiaire d'un élément intercalaire (44) déformable viscoélastiquement ou avec l'élasticité du caoutchouc.

9. Ensemble d'étanchement selon l'une des revendications précédentes, **caractérisé par le fait que** la tête d'étanchement (26) de la bague ondulée (20) d'étanchement radial présente, au moins par zones, une configuration de section transversale sphérique, ovale, elliptique ou polygonale.

10. Ensemble d'étanchement selon l'une des revendications précédentes, **caractérisé par le fait que** la bague ondulée (20) d'étanchement radial est constituée, en totalité ou au moins en partie, d'un matériau élastomère.

11. Ensemble d'étanchement selon l'une des revendications précédentes, **caractérisé par le fait que** la bague ondulée (20) d'étanchement radial est pourvue, côté haute pression, d'au moins un élément d'écoulement (64, 74) par l'intermédiaire duquel, lors d'un mouvement relatif des deux parties (12, 14) de machine autour de l'axe de mouvement, un écoulement de fluide est provoqué de façon telle que le fluide afflue vers la tête d'étanchement (26), côté haute pression, dans la zone de sa région d'étanchement (28).

12. Ensemble d'étanchement selon la revendication 11, **caractérisé par le fait que** l'élément d'écoulement (64, 74) est réalisé, au moins par zones, sous la forme d'une rainure et/ou d'un alésage traversant, voire d'un prolongement profilé de la bague ondulée (20) d'étanchement radial, qui est préférentiellement ménagé d'un seul tenant avec la tête d'étanchement (26) et s'étend au-delà de ladite tête d'étanchement.

13. Ensemble d'étanchement selon la revendication 12, **caractérisé par le fait que** la rainure est de réalisation ouverte aux deux extrémités.

14. Ensemble d'étanchement selon la revendication 12 ou 13, **caractérisé par le fait que** la section transversale de la rainure, par laquelle le fluide peut s'écouler, s'amenuise au moins par zones en direction de la région d'étanchement (28) de la tête d'étanchement (26).

15. Ensemble d'étanchement selon l'une des revendications 12 à 14, **caractérisé par le fait que** la rainure est en liaison fluidique, côté région d'étanchement, avec un canal annulaire d'écoulement (72) de la tête d'étanchement (26).

16. Ensemble d'étanchement selon la revendication 15, **caractérisé par le fait que** le canal d'écoulement (72) est directement délimité, dans le sens latéral, par la région d'étanchement (28) de la tête d'étanchement (26) en applique contre la surface d'étanchement (30).

17. Ensemble d'étanchement selon l'une des revendications précédentes, **caractérisé par le fait que** la région d'étanchement (28) de la tête d'étanchement (26) inclut au moins une bande annulaire de roulement (56) dotée, préférentiellement, d'une surface de roulement (60) continue, de préférence non structurée macroscopiquement ; et/ou **par le fait que** ladite région d'étanchement (28) est munie, frontalement, d'au moins une striure profilée annulaire.

18. Ensemble d'étanchement selon la revendication 11, **caractérisé par le fait que** l'élément d'écoulement (64, 74) présente une configuration de section transversale ovale, elliptique, circulaire, polygonale ou triangulaire.

19. Ensemble d'étanchement selon l'une des revendications 11 à 16 et 18, **caractérisé par le fait que** la bague ondulée (20) d'étanchement radial est munie d'une pluralité d'éléments d'écoulement (64, 74).

20. Ensemble d'étanchement selon la revendication 19, **caractérisé par le fait que** les éléments d'écoulement (64, 74) sont agencés en succession alignée, sur la tête d'étanchement (26), dans la direction périphérique de la bague ondulée (20) d'étanchement radial.

21. Ensemble d'étanchement selon l'une des revendications précédentes, **caractérisé par le fait que** la tête d'étanchement (26) est pourvue d'un élément de précontrainte (48) élastiquement déformable, et/ou d'une bague d'appui (52).
